# EUROPÄISCHE PATENTSCHRIFT

(11) **EP 2 875 248 B1**
(45) Veröffentlichungstag und Bekanntmachung des Hinweises auf die Patenterteilung: **17.03.2021**
(21) Anmeldenummer: 13736923.7
(22) Anmeldetag: 16.07.2013
(51) Int. Cl.: F16D 1/033, F16D 1/076

(54) **STIRNVERZAHNUNG MIT VERSETZTEM KONSTRUKTIONSPUNKT**
SERRATION HAVING AN OFFSET CONSTRUCTION POINT
DENTURE FRONTALE AYANT UN POINT DE CONCEPTION DÉCALÉ

(30) Priorität: 17.07.2012 DE 102012106440
(43) Veröffentlichungstag der Anmeldung: 27.05.2015
(73) Patentinhaber: Firma Neapco Europe GmbH, 52351 Düren (DE)
(72) Erfinder: FELCHNER, Christian, 42117 Wuppertal (DE); HOEKS, Luis, 52259 Eschweiler (DE); JACKELS, Wolfgang, 41372 Niederkrüchten (DE)
(74) Vertreter: Lohmanns, Bernard
(86) Internationale Anmeldenummer: PCT/EP2013/064968
(87) Internationale Veröffentlichungsnummer: WO 2014/012916

(56) Entgegenhaltungen:
- DE-A1- 4 138 917
- DE-A1-102008 047 296
- US-A- 3 557 574

## Beschreibung

Die Erfindung betrifft ein zur rotierenden Lagerung um eine Drehachse vorgesehenes Bauelement, insbesondere als Bestandteil einer Radnaben-Drehgelenk-Anordnung, wobei das Bauelement zur Drehmomentübertragung eine um die Drehachse umlaufende Stirnverzahnung aufweist, die für den vorgespannten Eingriff mit einem Drehpartner vorgesehen ist, der eine entsprechende Stirnverzahnung aufweist. Zur Abstützung des Drehmoments weist die Stirnverzahnung mehrere Zähne mit sich im Wesentlichen in Richtung Drehachse erstreckenden, beispielsweise radial verlaufenden, Zahnspitzen und dazwischen liegenden Zahntälern auf.

Das Vorsehen von paarenden Stirnverzahnungen bei Radnaben-Drehgelenk-Anordnungen ist bekannt, so ist in der DE 197 51 855 C1 eine Radnaben-Drehgelenk-Anordnung offenbart, bei der das Gelenkaußenteil scheibenförmig gestaltet ist. Zur Drehmomentübertragung auf die Radnabe ist ein Ringkörper vorgesehen, der einerseits mittels einer Stirnverzahnung mit dem Gelenkaußenteil und andererseits mittels einer Längsverzahnung mit der Radnabe drehfest verbunden ist. Die axiale Befestigung zwischen Gelenkaußenteil und Ringkörper erfolgt mittels eines Sicherungsrings. Gegenüber der Radnabe ist der Ringkörper durch Umformen eines hülsenförmigen Abschnitts der Radnabe axial befestigt, wobei die Radlagerung vom Ringkörper axial vorgespannt ist.

Auch aus der DE 36 36 243 A1 ist eine auf eine Stirnverzahnung zurückgreifende Radnaben-Drehgelenk-Anordnung bekannt, bei der die Radnabe einen Hülsenabschnitt mit einem Bördelbund aufweist, der einen Lagerinnenring der Radlagerung axial fixiert. An seinem Ende hat der Bördelbund eine Stirnverzahnung, die mit einer entsprechend gegengleichen Stirnverzahnung am Gelenkaußenteil zur Drehmomentübertragung in Eingriff ist. Die beiden Stirnverzahnungen liegen in einer gemeinsamen Radialebene.

Üblicherweise bedient man sich bei der Auslegung der Zähne einer Konstruktionsauslegung, wie sie gemeinhin als Hirth-Verzahnung bekannt ist. Diese Verzahnung wurde von Dr. Albert Hirth erfunden und im Rahmen der DE 440 816 patentiert. Diese Hirth-Verzahnung zeichnet sich dadurch aus, dass die Zähne der Stirnverzahnung jeweils eine eine erste Gerade bildende Eingriffskante aufweisen und zu den Zähnen im Eingriff korrespondierende Zahntäler jeweils eine zweite Gerade bilden, wobei die Geraden sich auf der Rotationsachse in einem Punkt schneiden.

Auch die DE 10 2005 054 283 B4 greift jeweils auf die zuvor beschriebene Hirth-Verzahnung an den Bauelementen der Radnaben-Drehgelenkanordnung zurück. Hier soll ein radial außen liegender Teil der am Eingriff teilhabenden Zähne der Verzahnungen in axialer Richtung vorauseilen, das heißt, dass bei einer axialen Verschraubung der beiden Verzahnungen diese sich zuerst radial außen berühren und die Zähne erst nach dem vollständigen Anziehen der Befestigungsschraube vollständig ineinander eingreifen. Dies wird dadurch erreicht, dass der Schnittpunkt der zuvor beschriebenen Geraden der einen Verzahnung und der Schnittpunkt der Gegenverzahnung nicht zusammenfallen, sondern beide Schnittpunkte auf der Drehachse versetzt zueinander liegen. Diese Vorgehensweise hat den Nachteil, dass das Eingriffsmaß im radial innenliegenden Bereich stark davon abhängt, wie stark die beiden Verzahnungen gegeneinander verspannt werden und somit eine punktuelle Überbelastung im Innenbereich nicht vermieden werden kann. Es hat sich nach mehreren Versuchen eine Auslegung einer Verzahnung als besonders überraschend belastbar herausgestellt, bei der eben nicht der Schnittpunkt der zuvor genannten Eingriffskantengerade und die Zahntalgeraden eines Zahnes auf der Drehachse liegt, sondern erfindungsgemäß versetzt dazu.

Die DE 10 2008 047296 A1 und die US 3 557 574 A offenbaren ein Bauelement zur rotierenden Lagerung um eine Drehachse und zur Drehmomentübertragung mit einem Drehpartner gemäß dem Oberbegriff des Anspruchs 1.

Vor diesem Hintergrund ist es die Aufgabe der Erfindung, einen gegenüber der üblichen Hirth-Verzahnung verbesserten Eingriff zwischen zwei Drehpartnern bereitzustellen, die mittels paarender Stirnverzahnungen in wechselwirkendem Eingriff stehen. Diese Aufgabe wird durch ein Bauelement des Anspruchs 1 gelöst. Eine entsprechend vorteilhafte Anordnung ist Gegenstand des nebengeordneten Anspruchs. Vorteilhafte Ausgestaltungen sind Gegenstand der jeweils abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Bauelement zur rotierenden Lagerung um eine Drehachse. Das Bauelement dient wenigstens unter anderem der Drehmomentübertragung mit einem Drehpartner. Das Bauelement weist eine um die Drehachse umlaufende erste Stirnverzahnung auf, die für den Eingriff, bevorzugt für den vorgespannten Eingriff, mit dem Drehpartner vorgesehen ist, der eine entsprechende zweite, mit der ersten paarende Stirnverzahnung aufweist. Die erste Stirnverzahnung weist mehrere Zähne mit sich im Wesentlichen in Richtung Drehachse erstreckenden Zahnspitzen und dazwischen liegenden Zahntälern auf. Bevorzugt ist eine um die Drehachse umlaufende Verzahnung vorgesehen.

In radialer Richtung kann sich ein Zahn der Verzahnung beispielsweise von der Drehachse bis zum jeweiligen Außenumfang über die den ganzen Radius erstrecken. Bevorzugt ist vorgesehen, dass sich der Zahn nicht bis zur Drehachse sondern über einen Teil des Radius von einem Innenumfang bis zu einem Außenumfang erstreckt, also beispielsweise die Verzahnung ringförmig ausgebildet ist, um so Raum für ein zentral angeordnetes Mittel zur Verspannung von Bauelement und Drehpartner zu schaffen. Erfindungsgemäß können auch die erste Verzahnung mehrere in Umfangsrichtung zueinander beabstandete Gruppen aus Zähnen aufweisen, die mit der zweiten Verzahnung des Drehpartners beim Eingriff paaren. Die erste Stirnverzahnung weist jeweils eine eine erste Linie bildende Eingriffskante, im Folgenden auch Kopflinie genannt, auf. D.h. die Linie wird jeweils durch die axialäußersten Punkte der Verzahnung auf den Zahnköpfen definiert. Die zwischen den Zähnen liegenden Zahntäler bilden jeweils eine zweite Linie, d.h. die in Axialrichtung tiefsten Punkte der Verzahnung definieren die zweite Linie, im Folgenden auch Fußlinie genannt. Der Verlauf der Zahnoberfläche zwischen jeweils der ersten und zweiten Linie definiert die Zahnflanke. Die Neigung der Zahnflanke zu einem die erste Linie schneidenden, zur Drehachse parallelen Lot kann in sinnvoller Weise beliebig sein. Die Flanken eines Zahnes können beispielsweise symmetrisch und asymmetrisch geneigt sein. Bevorzugt ist vorgesehen, dass der maximale Flankenwinkel bezogen auf das vorgenannte Lot 19,5° mit einer verarbeitungsbedingten beidseitigen Toleranzabweichung von maximal 0,5° beträgt. Die Zahnköpfe und/oder die Zahntäler können zudem abgerundet sein.

Erfindungsgemäß schneiden sich wenigstens zwei benachbarte zweite Linien in einem imaginären Punkt, der in der jeweiligen Halbkreisfläche jenseits der Drehachse zwischen der Drehachse und dem Maximalumfang der ersten Stirnverzahnung liegt. Dadurch, dass der imaginäre Punkt nicht auf sondern außerhalb der Drehachse liegt, wird erreicht, dass die Verjüngung des Zahnes in radialer Richtung gegenüber einem auf die Drehachse zumindest imaginär auslaufendem Zahn bei der erfindungsgemäßen Lösung weniger stark ausfällt. Durch diese Maßnahme wird gegenüber der Hirth-Verzahnung im radial innenliegenden Bereich eine höhere Materialstärke erreicht. Durch Versuche konnte überraschend festgestellt werden, dass bei einem spielfreien vorgespannten Eingriff beispielsweise mit einer üblichen Hirth-Verzahnung ein verbesserter drehfester Eingriff der Verzahnung ohne ein erhöhtes Risiko von Zahnausbruch erreicht werden. Um die Eindringtiefe der paarenden Verzahnungen im radial innenliegenden Bereich beizubehalten oder gar zu steigern, laufen die ersten Linien eines Zahnes beispielsweise parallel zu den benachbarten zweiten Linien oder divergieren gar in Richtung Drehachse.

Erfindungsgemäß ist vorgesehen, dass die ersten Linien die Drehachse schneiden, und sich somit eine im Wesentlichen, weil verarbeitungsbedingte Toleranzabweichungen in Kauf zu nehmen sind, radiale Ausrichtung der Zähne ergibt.

Zur Vereinfachung der Konstruktion ist vorgesehen, dass die zwischen zwei zweiten Linien liegende erste Linie ebenfalls den imaginären Punkt schneidet.

Bevorzugt definieren die ersten Linien eine Ebene. Gemäß einer weiteren Ausgestaltung ist vorgesehen, dass die ersten Linien auf der Mantelfäche eines Kegels bzw. Kegelstumpfs liegen. Beispielsweise handelt es sich um einen Kegel- oder Kegelstumpf-Innenverzahnung oder eine Kegel- oder Kegelstumpf-Außenverzahnung.

"Linie" im Sinne der Erfindung setzt nicht zwingend einen geradlinigen Verlauf der ersten und zweiten Linien voraus. Auch wenn bevorzugt die Linien geradlinig sind, so sind auch gekrümmte Verläufe der Linien in beliebiger Richtung denkbar.

Bevorzugt sind wenigstens die ersten Linien in einer zur Richtung des Eingriffs parallelen Richtung gekrümmt. Anders ausgedrückt eine zugehörige Krümmungsebene ist parallel zur Drehachse oder die Drehachse liegt gar in der Krümmungsebene. Bevorzugt sind sie konkav gekrümmt. Bevorzugt ist wenigstens die erste Linie ausschließlich in der zur Richtung des Eingriffs parallelen Richtung gekrümmt. D.h. die Linie ist ansonsten geradlinig und die einzige Krümmungsebene ist parallel zur Drehachse oder die Drehachse liegt in dieser Krümmungsebene. Gemäß einer bevorzugten Ausführungsform ist vorgesehen, dass die erste Linie über ihren Verlauf ihre Krümmungsrichtung beibehält.

Beispielsweise strebt die erste Linie vom Außenumfang der Verzahnung nicht in geradliniger Richtung auf den primär durch die zweiten Linien definierten, imaginären Punkt zu, sondern weist im radialen Verlauf eine diesbezügliche Wölbung in Eingriffsrichtung auf. Es hat sich gezeigt, dass durch eine Krümmung in der besagten Richtung die Eingriffsverhältnisse besser nachgebildet werden können. Es hat sich nämlich herausgestellt, dass insbesondere bei einer zentralen Verspannung die elastische Nachgiebigkeit und deren Variation in radialer Richtung sehr stark vom konstruktiven "Unterbau" abhängt. Diese radial unterschiedliche Nachgiebigkeit muss bei der Auslegung der Verzahnung berücksichtigt werden. Es hat sich herausgestellt, dass durch einen geradlinigen Verlauf der Konstruktionslinien, insbesondere der ersten Konstruktionslinien, dem nur unzureichend Rechnung getragen werden kann. Gerade durch eine solche Krümmung lässt sich eine bessere Anpassung an die konstruktiven Gegebenheiten des Bauelements finden.

Bevorzugt sind ferner die zweiten Linien so gekrümmt, dass der Flankenwinkel des jeweiligen Zahnes über dessen radialen Verlauf konstant ist. Der Flankenwinkel ist bei jeweils einem zur ersten Linie senkrechten und zur Drehachse parallelen Schnitt durch den Zahn der Winkel zwischen einem zur Drehachse parallelen "Lot" durch die erste Linie und der die erste und zweite Linie verbindenden Geraden. Beispielsweise folgt die Krümmung der zweiten Linien der Krümmung der ersten Linie. Eine Aufwölbung oder auch Balligkeit im Bereich der Zahnflanken soll erfindungsgemäß vermieden werden. Anders ausgedrückt, die Querschnittgeometrieverhältnisse des Zahnes sollen beibehalten werden, nur dessen radialer Verlauf weist eine weg vom Eingriff gerichtete Krümmung oder Rundung auf.

Damit kann sichergestellt werden, dass es trotz der Krümmung wenigstens abschnittsweise zu einem formschlüssigen Eingriff, eine entsprechende Ausgestaltung der Stirnverzahnung des Drehpartners vorausgesetzt, mit dessen Stirnverzahnung ergibt.

Die Erfindung betrifft ferner eine Anordnung zur Drehmomentübertragung. Diese umfasst ein um eine Drehachse rotierend gelagertes Bauelement und einen Drehpartner, wobei das Bauelement in einer der zuvor beschriebenen und jeweils vorteilhaften Ausführungsformen ausgestaltet ist. Die zweite, mit der ersten Stirnverzahnung in umlaufendem Eingriff stehende, somit paarende Stirnverzahnung des Drehpartners weist erfindungsgemäß mehrere Zähne mit sich im Wesentlichen in Richtung Drehachse erstreckenden Zahnspitzen und dazwischen liegenden Zahntälern auf und die Zahnspitzen der zweiten Stirnverzahnung definieren jeweils eine eine dritte Linie bildende Eingriffskante und die zwischen den Zähnen liegenden Zahntäler jeweils eine vierte Linie bilden. Die Verzahnung des Drehpartners kann beliebig ausgebildet sein, sofern ein umlaufender Eingriff mit dem Bauelement hergestellt werden kann. Bevorzugt entsteht wenigstens abschnittsweise für jeden Zahn ein spielfreier, möglichst formschlüssiger Eingriff, d.h. der Zahn bildet wenigstens bereichsweise mit seinen beiden Flanken einen Berührkontakt mit den Flanken der Zähne der jeweils anderen Stirnverzahnung aus. Gemäß einer bevorzugten Ausgestaltung ist die zweite Verzahnung als Hirth-Verzahnung ausgebildet, d.h. die dritten und vierten Linien schneiden sich in einem auf der Drehachse liegenden Punkt.

Bevorzugt ist vorgesehen, dass sich wenigstens zwei benachbarte vierte Linien in einem imaginären Punkt schneiden, der in der jeweiligen Halbkreisfläche diesseits der Drehachse zwischen der Drehachse und dem Maximalumfang der zweiten Stirnverzahnung liegt. Dadurch wird erreicht, dass die Verjüngung des Zahnes in radialer Richtung gegenüber einem auf die Drehachse zumindest imaginär auslaufendem Zahn bei der erfindungsgemäßen Lösung stärker ausfällt. Durch diese Maßnahme wird gegenüber der Hirth-Verzahnung im radial innenliegenden Bereich eine geringere Materialstärke erreicht, wodurch im Zusammenspiel von erster und zweiter Stirnverzahnung Raum und Spiel für den Eingriff geschaffen wird, so dass unter Verspannung der für die Drehmomentübertragung wichtigere, weil tragfähigere in radialer Richtung äußere Bereich zwar möglicherweise zuerst und stärker in wechselseitigen Eingriff gelangt, aber der Eingriff im radial innenliegenden Bereich aufgrund des durch die Verjüngung bewirkten Spiels weniger der Gefahr einer punktuellen Überbelastung ausgesetzt ist. Anders ausgedrückt, das in der Regel sich ergebende radial nach innen zunehmende Spiel zwischen der ersten und zweiten Stirnverzahnung sorgt bei der angestrebten kraftschlüssigen Verspannung der beiden für eine Sicherheitsreserve im radial innenliegenden, aufgrund der geringeren Materialstärke der Zähne empfindlicheren Bereich der Zähne, so dass es durch die erfindungsgemäße Paarung ermöglicht ist, in radialer Richtung von einer radial außenliegenden kraftschlüssigen in eine radial innenliegenden überwiegend formschlüssigen Eingriff überzugehen, um Schäden im Innenbereich zu vermeiden.

Zu weiteren Verbesserung in diesem Sinne ist es bevorzugt, dass die zwischen zwei vierten Linien liegende, dritte Linie ebenfalls den imaginären Punkt schneidet. Bevorzugt ist dabei, dass die erste Stirnverzahnung diesbezüglich entsprechend ausgebildet ist: also dessen erste Linie eines Zahnes schneidet ebenfalls den Schnittpunkt der dem Zahn zugehörigen zweiten Linien.

Bevorzugt definieren die imaginären Punkte der ersten Stirnverzahnung eine erste zur Drehachse senkrechte Ebene und die imaginäre Punkte der zweiten Stirnverzahnung eine zweite, zur Drehachse senkrechte Ebene, wobei die Ebenen auch bei vorgespanntem Eingriff von Bauelement und Drehpartner zueinander parallel beabstandet sind. Beispielsweise wird der Versatz dieser Ebenen durch einen gekrümmten Verlauf der zuvor beschriebenen Konstruktionslinien, beispielsweise der ersten und dritten Linien, erreicht.

Gemäß einer bevorzugten Ausführungsform ist vorgesehen, dass die imaginären Punkte des Bauelements und die Punkte des Drehpartners jeweils auf imaginären Kreisen angeordnet sind, die koaxial um die Drehachse angeordnet sind. Bevorzugt weisen die Kreise den gleichen Radius auf. In einer Ausgestaltung entspricht der Radius einem Radius eines zentralen Durchbruchs im Bauelement, der für Mittel zur Erzeugung eines vorgespannten Eingriff zwischen den Verzahnungen vorgesehen ist.

Bevorzugt ist die Verwendung in einem Kraftfahrzeug, wobei die Anordnung zwischen dem Rad und einer Seitenwelle eines Kraftfahrzeugs vorgesehen ist. Beispielsweise ist die eine der Stirnverzahnungen aus erster und zweiter Stirnverzahnung am Wälznietbund des Radlagers ausgebildet und mittels einer Befestigungsschraube gegenüber der Gegenverzahnung, d.h. der jeweiligen anderen aus erster und zweiter Stirnverspannung verspannt, die an der Gelenkglocke ausgebildet ist, wobei die Gelenkglocke ein Verbindungselement des mit der Seitenwelle drehfest verbundenen Drehgelenks ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Fig. 1:: eine Teilschnittdarstellung einer erfindungsgemäßen Radnaben-Drehgelenk-Anordnung;
- Fig. 2:: eine perspektivische Aufsicht auf eine erfindungsgemäße erste Ausführungsform der ersten Stirnverzahnung;
- Fig. 3:: eine perspektivische Aufsicht auf eine erfindungsgemäße erste Ausführungsform der zweiten Stirnverzahnung;
- Fig. 4:: eine perspektivische Aufsicht auf eine erfindungsgemäße zweite Ausführungsform der ersten Stirnverzahnung;
- Fig. 5:: eine perspektivische Aufsicht auf eine nicht erfindungsgemäße Ausführungsform der zweiten Stirnverzahnung.

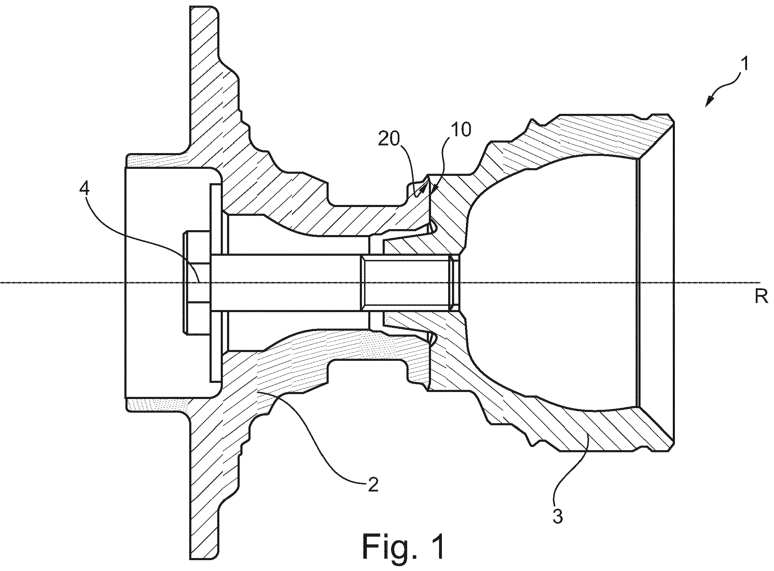

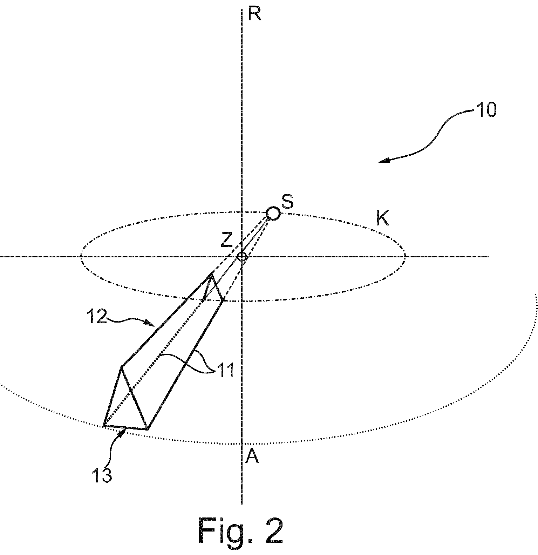

Figur 1 zeigt eine erfindungsgemäße Radnaben-Drehgelenk-Anordnung 1, die ein erfindungsgemäßes Bauelement 3, hier die eine Gelenkglocke, sowie einen Drehpartner 2, hier eine Radnabe, umfasst. Die Radnabe 2 trägt ein nicht dargestelltes Rad. Die Gelenkglocke 3 ist Teil eines Gelenks, das von einer nicht dargestellten Seitenwelle angetrieben in Rotation um die Drehachse R versetzt wird. Zur mechanischen Kopplung zwischen dem Bauelement 3 und dem Drehpartner 2 sind diese jeweils mit einer um die Drehachse R umlaufenden Stirnverzahnung 10 bzw. 20 versehen. Diese paaren miteinander, so dass die Zähne der einen in die Zahntäler der anderen wenigstens abschnittsweise spielfrei, möglichst formschlüssig eingreift. Zur Erzeugung einer den Eingriff der Verzahnungen betreffenden Vorspannung ist als entsprechendes Mittel eine zentrale Verschraubung 4 vorgesehen. D.h. eine Schraube 4 durchgreift einen zentralen Durchbruch der Radnabe 2 und ist in eine Gewindebohrung der Gelenkglocke 3 geschraubt und verspannt somit die erste, gelenkglockenseitige Stirnverzahnung 10 mit der zweiten, nabenseitigen Stirnverzahnung 20. Die konstruktive und erfindungsgemäße Auslegung der Zähne der Stirnverzahnungen wird anhand der folgenden Figuren erläutert, wobei hier jeweils die Konstruktionslinien eine schematische Wiedergabe eines Zahnes verdeutlichen sollen. So zeigt die Figur 2 die Konstruktionslinien eines Zahnes 13 einer ersten Ausführungsform der ersten Verzahnung 10, wie sie beispielsweise gemäß der in Figur 1 gezeigten erfindungsgemäßen Anordnung 1 an der Gelenkglocke 3 ausgebildet ist. Wie in den folgenden Figuren ist nur ein Zahn 13 der ersten Stirnverzahnung dargestellt. Die übrigen, aber jeweils zu dem dargestellten Zahn 13 gleichförmig ausgebildeten Zähne sind in Umfangsrichtung um die Drehachse R umlaufend entlang des Kreises A angeordnet. Entsprechendes gilt für die folgenden Figuren. Die Konstruktionslinie 12 wird durch die Eingriffskante, d.h. dem äußersten Punkt des Zahns definiert. Die Konstruktionslinien 11 werden jeweils durch die tiefsten Punkte der zum Zahn benachbarten Zahntäler definiert. Die Fläche zwischen der Kopflinie 12 zur jeweiligen Fußlinie 11 definiert den Flankenverlauf. Der zugehörige Flankenwinkel ist der Winkel zwischen einer durch die Linie 12 und der Drehachse R aufgespannten Ebene und der jeweils durch die Linien 12 und 11 aufgespannten Fläche. Die Konstruktionslinien 11, 12 schneiden sich in einem imaginären Punkt S der jenseits der Drehachse R auf einem Kreis K aber innerhalb des Außenumfangs A der ersten Verzahnung 10 liegt. Auf dem Kreis K liegen die Schnittpunkte S aller Zähne der ersten Stirnverzahnung 10.Der Schnittpunkt S ist schon deshalb imaginär, da der zentrale Durchbruch in der ersten Verzahnung 10 für die Vorspannmittel 4 einer Erstreckung des Zahnes bis zur Drehachse R entgegensteht. Erfindungsgemäß liegt hier der imaginäre Punkt S eben nicht auf der Drehachse R, sondern liegt in einer jenseits der Drehachse R liegenden Halbkreisfläche zwischen Außenumfang A der ersten Stirnverzahnung 10 und Drehachse R. Der Zahn 13 weist somit im radial innenliegenden Bereich ein Ausmaß auf, das über das einer üblichen Hirth-Verzahnung hinausgeht, bei der der Schnittpunkt auf der Drehachse R liegt.
In einer nicht dargestellten Ausführungsform ist vorgesehen, dass die zweite, mit der zuvor beschriebenen ersten Stirnverzahnung paarende und an der Radnabe 2 vorgesehene, zweite Stirnverzahnung als Hirth-Verzahnung ausgebildet ist.

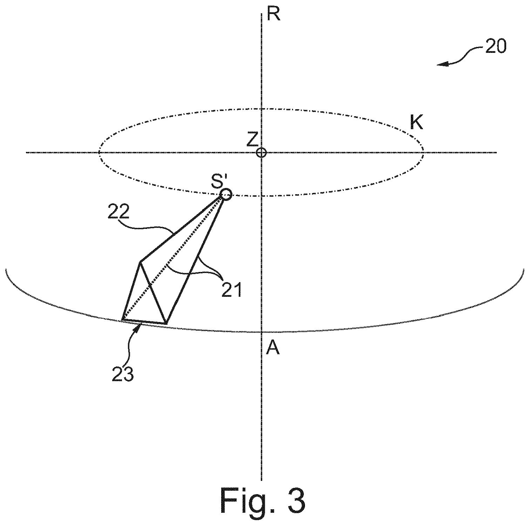

In Figur 3 ist jedoch eine weitere Ausführungsform der zweiten Stirnverzahnung 20 gezeigt, die gemäß der Anordnung aus Figur 1 mit der ersten Stirnverzahnung 10 paart und an der Radnabe 2, also dem Drehpartner, vorgesehen ist.

So zeigt die Figur 3 die Konstruktionslinien eines Zahnes 23 einer ersten Ausführungsform der erfindungsgemäßen zweiten Stirnverzahnung 20. Es ist nur ein Zahn 23 der zweiten Stirnverzahnung 20 dargestellt. Die übrigen, aber jeweils zu dem dargestellten Zahn 23 gleichförmig ausgebildeten Zähne sind in Umfangsrichtung um die Drehachse R umlaufend angeordnet. Die Konstruktionslinie 22 wird durch die Eingriffskante, d.h. dem äußersten Punkt des Zahns 23 definiert. Die Konstruktionslinien 21 werden jeweils durch die tiefsten Punkte der zum Zahn benachbarten Zahntäler definiert. Die Fläche zwischen der Kopflinie 22 zur jeweiligen Fußlinie 21 definiert den Flankenverlauf. Der zugehörige Flankenwinkel ist der Winkel zwischen einer durch die Linie 22 und der Drehachse R aufgespannten Ebene und der jeweils durch die Linien 22 und 21 aufgespannten Fläche. Die Konstruktionslinien 22, 21 schneiden sich in einem imaginären Punkt S' der diesseits der Drehachse Rauf einem Kreis K aber innerhalb des Außenumfangs A der Verzahnung liegt. Auf dem Kreis K liegen die Schnittpunkte S' aller Zähne der zweiten Stirnverzahnung 20. In dieser Ausführungsform läuft der "körperliche" Zahn 23 im Schnittpunkt S' aus. Erfindungsgemäß liegt hier der imaginäre Punkt S' eben nicht auf der Drehachse R sondern liegt in einer diesseits der Drehachse R liegenden Halbkreisfläche zwischen Außenumfang A und Drehachse R. Der Zahn 23 weist somit im radial innenliegenden Bereich ein Ausmaß auf, das unter dem einer üblichen Hirth- Verzahnung liegt, bei der der Schnittpunkt auf der Drehachse R liegt.

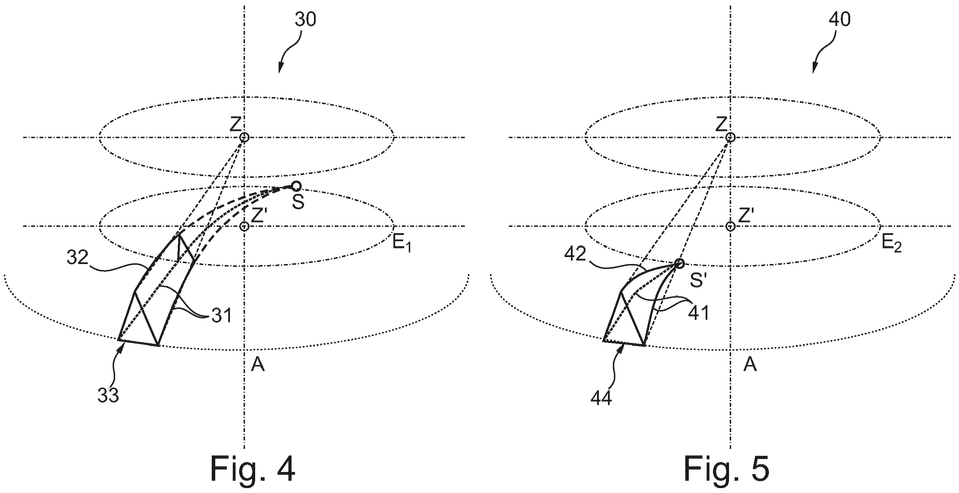

In der den Figur 4 ist eine Abwandlung der ersten und zweiten Stirnverzahnungen 30 und 40 gezeigt.

So zeigt die Figur 4 die Konstruktionslinien eines Zahnes 33 einer zweiten Ausführungsform der ersten Verzahnung 30, wie sie beispielsweise gemäß der in Figur 1 gezeigten erfindungsgemäßen Anordnung 1 an der Gelenkglocke 3 ausgebildet ist. Es ist nur ein Zahn 33 dieser ersten Stirnverzahnung 30 dargestellt. Die übrigen, aber jeweils zu dem dargestellten Zahn 33 gleichförmig ausgebildeten Zähne sind in Umfangsrichtung um die Drehachse R umlaufend angeordnet. Die Konstruktionslinie 32 wird durch die Eingriffskante, d.h. dem äußersten Punkt des Zahns definiert. Die Konstruktionslinien 31 werden jeweils durch die tiefsten Punkte der zum Zahn benachbarten Zahntäler definiert. Die Fläche zwischen der Kopflinie 32 und der jeweiligen Fußlinie 31 definiert den Flankenverlauf. Die Kopflinie 32 und die Fußlinien 31 sind jeweils in einer zur Drehachse parallelen Richtung entgegen der Eingriffsrichtung gekrümmt. Die Konstruktionslinien 32 und 31 schneiden sich in einem imaginären Punkt S der jenseits der Drehachse R auf einem Kreis K aber innerhalb des Außenumfangs A der ersten Verzahnung 30 liegt. Auf dem Kreis K liegen die Schnittpunkte S aller Zähne der ersten Stirnverzahnung 30. Der Schnittpunkt S ist schon deshalb imaginär, da der zentrale Durchbruch in der ersten Verzahnung 30 für die Vorspannmittel 4 einer Erstreckung des Zahnes bis zur Drehachse R entgegensteht. Erfindungsgemäß liegt hier der imaginäre Punkt S eben nicht auf der Drehachse R sondern liegt in einer jenseits der Drehachse R liegenden Halbkreisfläche zwischen Außenumfang A der ersten Stirnverzahnung 30 und der Drehachse R, wobei hier der Kreis K zu dem Schnittpunkt Z, der sich bei der üblichen Hirth-Verzahnung ergibt, entgegen der Eingriffsrichtung beabstandet ist. Der Zahn 33 weist somit im radial innenliegenden Bereich nicht nur ein Ausmaß auf, das über das einer üblichen Hirth-Verzahnung hinausgeht, sondern der Eingriff ist im radial innenliegenden Bereich in nicht linearer Weise zurückgenommen und ist somit besser an den radiale Variation der elastischen Nachgiebigkeit des Bauelements, beispielsweise der Gelenkglocke 3 angepasst. Es wird nochmals darauf hingewiesen, dass auch diese Ausführungsform geeignet ist, mit einer üblichen Hirth-Verzahnung, die an der Radnabe 2 vorgesehen ist, zu paaren.

In Figur 5 ist eine weitere nicht erfindungsgemäße Ausführungsform der zweiten Stirnverzahnung 40 gezeigt, die zur Paarung mit der zuvor beschriebenen Ausführungsform der ersten Stirnverzahnung 30 vorgesehen ist und an der Radnabe 2, also dem Drehpartner, vorgesehen ist.

So zeigt die Figur 5 die Konstruktionslinien eines Zahnes 44 der zweiten Ausführungsform der zweiten Stirnverzahnung 40. Es ist nur ein Zahn 44 der zweiten Stirnverzahnung 40 dargestellt. Die übrigen, aber jeweils zu dem dargestellten Zahn 44 gleichförmig ausgebildeten Zähne sind in Umfangsrichtung um die Drehachse R umlaufend angeordnet. Die Konstruktionslinie 42 wird durch die Eingriffskante, d.h. dem äußersten Punkt des Zahns 44 definiert. Die Konstruktionslinien 41 werden jeweils durch die tiefsten Punkte der zum Zahn benachbarten Zahntäler definiert. Die Fläche zwischen der Kopflinie 42 zur jeweiligen Fußlinie 41 definiert den Flankenverlauf. Der Flankenwinkel ist über den radialen Verlauf des Zahnes 44 konstant.
So liegt hier der imaginäre Punkt S' eben nicht auf der Drehachse R sondern liegt in einer diesseits der Drehachse R liegenden Halbkreisfläche zwischen Außenumfang Ader zweiten Stirnverzahnung 40 und der Drehachse R, wobei hier der Kreis K zu dem Schnittpunkt Z, der sich bei der üblichen Hirth-Verzahnung ergibt, entgegen der Eingriffsrichtung beabstandet ist. Der Zahn 44 weist somit im radial innenliegenden Bereich nicht nur ein Ausmaß auf, das unter dem einer üblichen Hirth-Verzahnung liegt, sondern der Eingriff ist im radial innenliegenden Bereich in nicht linearer Weise zurückgenommen und ist somit besser an den radiale Variation der elastischen Nachgiebigkeit des Bauelements, beispielsweise der Radnabe 2 angepasst.

## Patentansprüche

1. Bauelement (3) zur rotierenden Lagerung um eine Drehachse und zur Drehmomentübertragung mit einem Drehpartner (2), wobei das Bauelement eine um die Drehachse (R) umlaufende erste Stirnverzahnung (10) aufweist, die für den Eingriff mit dem Drehpartner (2) vorgesehen ist, der eine entsprechende zweite, mit der ersten Stirnverzahnung (10) paarende Stirnverzahnung (20) aufweist, wobei die erste Stirnverzahnung (10) mehrere Zähne (13) mit sich im Wesentlichen in Richtung Drehachse erstreckenden Zahnspitzen und dazwischen liegenden Zahntälern aufweist und die Zahnspitzen der erste Stirnverzahnung jeweils eine eine erste Linie (12) bildende Eingriffskante aufweisen und die zwischen den Zähnen liegenden Zahntäler jeweils eine zweite Linie (11) definieren, wobei die zwischen zwei zweiten Linien (11) liegenden erste Linie die Drehachse (R) schneidet, **dadurch gekennzeichnet, dass** sich wenigstens zwei benachbarte zweite Linien (11) in einem imaginären Punkt (S) schneiden, der in der jeweiligen Halbkreisfläche jenseits der Drehachse (R) zwischen der Drehachse (R) und dem Maximalumfang (A) der ersten Stirnverzahnung (10) liegt.

2. Bauelement (3) gemäß Anspruch 1, wobei die zwischen zwei zweiten Linien liegende erste Linie den imaginären Punkt schneidet.

3. Bauelement (3) gemäß einem der vorhergehenden Ansprüche, wobei die ersten Linien eine Ebene definieren.

4. Bauelement (3) gemäß einem der vorhergehenden Ansprüche, wobei die ersten Linien auf der Mantelfäche eines Kegelstumpfs liegen.

5. Bauelement (3) gemäß einem der vorhergehenden Ansprüche, wobei wenigstens die ersten Linien in einer zur Drehachse parallelen Richtung, bevorzugt entgegen der Eingriffsrichtung, gekrümmt sind.

6. Bauelement (3) gemäß dem vorhergehenden Anspruch, wobei ferner die zweiten Linien so gekrümmt sind, dass der Flankenwinkel des jeweiligen Zahnes über dessen radialen Verlauf konstant ist.

7. Anordnung (1) zur Drehmomentübertragung, aufweisend ein um eine Drehachse rotierend gelagertes Bauelement (3), das gemäß einem der vorhergehenden Ansprüche ausgestaltet ist, und einen Drehpartner (2) mit einer zweiten Stirnverzahnung (20) die mit der ersten Stirnverzahnung (10) in umlaufendem Eingriff steht, wobei die zweite Stirnverzahnung (20) des Drehpartners (2) mehrere Zähne mit sich im Wesentlichen in Richtung Drehachse erstreckenden Zahnspitzen und dazwischen liegenden Zahntälern aufweist und die Zahnspitzen der zweiten Stirnverzahnung jeweils eine eine dritte Linie (22) bildende Eingriffskante aufweisen und die zwischen den Zähnen vorgesehenen Zahntäler jeweils eine vierte Linie (21) definieren.

8. Anordnung (1) gemäß dem vorhergehenden Anspruch, wobei sich wenigstens zwei benachbarte vierte Linien (21) in einem imaginären Punkt (S') schneiden, der in der jeweiligen Halbkreisfläche diesseits der Drehachse (R) zwischen der Drehachse (R) und dem Maximalumfang (A) der zweiten Stirnverzahnung (20) liegt.

9. Anordnung (1) gemäß dem vorhergehenden Anspruch, wobei die zwischen zwei vierten Linien (21) liegende dritte Linie (22) ebenfalls den imaginären Punkt (S') schneidet.

10. Anordnung (1) gemäß einem der beiden vorhergehenden Ansprüche, wobei die imaginären Punkte (S) der ersten Stirnverzahnung (10) eine erste zur Drehachse (R) senkrechte Ebene (E₁) definieren und die imaginäre Punkte (S') der zweiten Stirnverzahnung (20) eine zweite zur Drehachse (R) senkrechte Ebene (E₂) definieren, wobei die Ebenen (E₁, E₂) auch bei vorgespanntem Eingriff von Bauelement (3) und Drehpartner (2) zueinander parallel beabstandet sind.

11. Anordnung (1) gemäß einem der beiden vorhergehenden Ansprüche, wobei die imaginären Punkte (S) des Bauelements (3) und die imaginären Punkte (S') des Drehpartners (2) jeweils auf imaginären Kreisen (K) angeordnet sind, die koaxial um die Drehachse (R) angeordnet sind.

12. Anordnung (1) gemäß dem vorhergehenden Anspruch, wobei der Radius der Kreise (K) gleich ist.

13. Anordnung (1) gemäß einem der vorhergehenden Ansprüche 7 bis 12, wobei ferner Mittel (4) zur Bewirkung eines vorgespannten Eingriffs zwischen erster (10) und zweiter Stirnverzahnung (20) vorgesehen sind.

14. Anordnung (1) gemäß einem der vorhergehenden Ansprüche 7 bis 13,wobei die Anordnung zwischen dem Rad und einer Seitenwelle eines Kraftfahrzeugs vorgesehen ist.

## Claims

1. Component (3) for mounting so as to be rotatable about a rotation axis and for transmitting torque, having a rotating partner (2), wherein the component has a first spur gearing (10) which encircles the rotation axis (R) and which is provided for engaging with the rotating partner (2) which has a corresponding second spur gearing (20) which meshes with the first spur gearing (10), wherein the first spur gearing (10) has a plurality of teeth (13) having tooth tips, the latter extending substantially in the direction of the rotation axis, and intervening tooth depressions, and the tooth tips of the first spur gearing have in each case an engagement edge that forms a first line (12) and the tooth depressions lying between the teeth define in each case a second line (11), wherein the first line lying between two second lines (11) intersects the rotation axis (R), **characterized in that** at least two neighbouring second lines (11) intersect in an imaginary point (S) which in the respective semi-circular area beyond the rotation axis (R) lies between the rotation axis (R) and the maximum circumference (A) of the first spur gearing (10).

2. Component (3) according to Claim 1, wherein the first line lying between two second lines intersects the imaginary point.

3. Component (3) according to one of the preceding claims, wherein the first lines define a plane.

4. Component (3) according to one of the preceding claims, wherein the first lines lie on the shell face of a truncated cone.

5. Component (3) according to one of the preceding claims, wherein at least the first lines are curved in a direction which is parallel to the rotation axis, preferably counter to the direction of engagement.

6. Component (3) according to the preceding claim, wherein furthermore the second lines are curved such that the flank angle of the respective tooth is consistent across the radial profile of the latter.

7. Assembly (1) for transmitting torque, having a component (3) which is mounted so as to rotate about a rotation axis and which is designed according to one of the preceding claims, and a rotating partner (2) having a second spur gearing (20) which in a revolving manner engages with the first spur gearing (10), wherein the second spur gearing (20) of the rotating partner (2) has a plurality of teeth having tooth tips, the latter extending substantially in the direction of the rotation axis, and intervening tooth depressions, and the tooth tips of the second spur gearing have in each case an engagement edge that forms a third line (22), and the tooth depressions provided between the teeth define in each case a fourth line (21).

8. Assembly (1) according to the preceding claim, wherein at least two neighbouring fourth lines (21) intersect in an imaginary point (S') which in the respective semi-circular area beyond the rotation axis (R) lies between the rotation axis (R) and the maximum circumference (A) of the second spur gearing (20).

9. Assembly (1) according to the preceding claim, wherein the third line (22) lying between two fourth lines (21) likewise intersects the imaginary point (S').

10. Assembly (1) according to one of the two preceding claims, wherein the imaginary points (S) of the first spur gearing (10) define a first plane (E₁) perpendicular to the rotation axis (R), and the imaginary points (S') of the second spur gearing (20) define a second plane (E₂) perpendicular to the rotation axis (R), wherein the planes (E₁, E₂) are spaced so as to be mutually parallel even when the component (3) and the rotating partner (2) engage under preloading.

11. Assembly (1) according to one of the two preceding claims, wherein the imaginary points (S) of the component (3) and the imaginary points (S') of the rotating partner (2) are in each case disposed on imaginary circles (K) which are disposed so as to be coaxial about the rotation axis (R).

12. Assembly (1) according to the preceding claim, wherein the circles (K) are of identical radius.

13. Assembly (1) according to one of preceding Claims 7 to 12, wherein furthermore means (4) for establishing a pre-loaded engagement between the first spur gearing (10) and the second spur gearing (20) are provided.

14. Assembly (1) according to one of preceding Claims 7 to 13, wherein the assembly is provided between the wheel and a side shaft of a motor vehicle.

## Revendications

1. Composant (3) pour le support rotatif autour d'un axe de rotation et pour le transfert de couple avec un partenaire de rotation (2), le composant présentant une première denture frontale (10) s'étendant circonférentiellement autour de l'axe de rotation (R), qui est prévue pour l'engagement avec le partenaire de rotation (2), qui présente une deuxième denture frontale correspondante (20) appariée à la première denture frontale (10), la première denture frontale (10) présentant plusieurs dents (13) avec des pointes de dents s'étendant essentiellement dans la direction de l'axe de rotation et des espaces entre-dents situés entre celles-ci, et les pointes de dents de la première denture frontale présentant à chaque fois une arête d'engagement formant une première ligne (12) et les espaces entre-dents situés entre les dents définissant à chaque fois une deuxième ligne (11), la première ligne située entre deux deuxièmes lignes (11) coupant l'axe de rotation (R),
**caractérisé en ce**
**qu'**au moins deux deuxièmes lignes adjacentes (11) s'intersectent en un point imaginaire (S) qui est situé dans la surface respective en demi-cercle au-delà de l'axe de rotation (R) entre l'axe de rotation (R) et la périphérie maximale (A) de la première denture frontale (10) .

2. Composant (3) selon la revendication 1, dans lequel la première ligne située entre deux deuxièmes lignes passe par le point imaginaire.

3. Composant (3) selon l'une quelconque des revendications précédentes, dans lequel les premières lignes définissent un plan.

4. Composant (3) selon l'une quelconque des revendications précédentes, dans lequel les premières lignes sont situées sur la surface d'enveloppe d'un tronc de cône.

5. Composant (3) selon l'une quelconque des revendications précédentes, dans lequel au moins les premières lignes sont courbées dans une direction parallèle à l'axe de rotation, de préférence dans le sens opposé à la direction d'engagement.

6. Composant (3) selon la revendication précédente, dans lequel les deuxièmes lignes sont en outre courbées de telle sorte que l'angle de flanc de la dent respective soit constant sur son étendue radiale.

7. Agencement (1) pour le transfert de couple, présentant un composant (3) supporté à rotation autour d'un axe de rotation, qui est réalisé selon l'une quelconque des revendications précédentes, et un partenaire de rotation (2) avec une deuxième denture frontale (20) qui est en engagement périphérique avec la première denture frontale (10), la deuxième denture frontale (20) du partenaire de rotation (2) présentant plusieurs dents avec des pointes de dents s'étendant essentiellement dans la direction de l'axe de rotation et des espaces entre-dents situés entre celles-ci, et les pointes de dents de la deuxième denture frontale présentant à chaque fois une arête d'engagement formant une troisième ligne (22) et les espaces entre-dents prévus entre les dents définissant à chaque fois une quatrième ligne (21).

8. Agencement (1) selon la revendication précédente, dans lequel au moins deux quatrièmes lignes adjacentes (21) s'intersectent en un point imaginaire (S') qui est situé dans la surface respective en demi-cercle de ce côté de l'axe de rotation (R) entre l'axe de rotation (R) et la périphérie maximale (A) de la deuxième denture frontale (20).

9. Agencement (1) selon la revendication précédente, dans lequel la troisième ligne (22) située entre deux quatrièmes lignes (21) passe également par le point imaginaire (S').

10. Agencement (1) selon l'une quelconque des deux revendications précédentes, dans lequel les points imaginaires (S) de la première denture frontale (10) définissent un premier plan (E₁) perpendiculaire à l'axe de rotation (R) et les points imaginaires (S') de la deuxième denture frontale (20) définissent un deuxième plan (E₂) perpendiculaire à l'axe de rotation (R), les plans (E₁, E₂) étant espacés parallèlement l'un à l'autre également lors de l'engagement avec précontrainte du composant (3) et du partenaire de rotation (2).

11. Agencement (1) selon l'une quelconque des deux revendications précédentes, dans lequel les points imaginaires (S) du composant (3) et les points imaginaires (S') du partenaire de rotation (2) sont à chaque fois disposés sur des cercles imaginaires (K) qui sont disposés coaxialement autour de l'axe de rotation (R).

12. Agencement (1) selon la revendication précédente, dans lequel le rayon des cercles (K) est identique.

13. Agencement (1) selon l'une quelconque des revendications précédentes 7 à 12, dans lequel en outre des moyens (4) sont prévus pour réaliser un engagement avec précontrainte entre la première (10) et la deuxième (20) denture frontale.

14. Agencement (1) selon l'une quelconque des revendications précédentes 7 à 13, l'agencement étant prévu entre la roue et un arbre latéral d'un véhicule automobile.
